# EUROPEAN PATENT SPECIFICATION

(11) **EP 0 824 865 B1**
(45) Date of publication and mention of the grant of the patent: **09.01.2002**
(21) Application number: 97306064.3
(22) Date of filing: 08.08.1997
(51) Int. Cl.: A21C 11/00, A21C 11/10

(54) **A method and apparatus for manufacturing raised-brimmed products**
Verfahren und Vorrichtung zur Herstellung von Produkten mit einem vorspringenden Rand
Procédé et appareil pour la production des produits avec un bord surélevé

(30) Priority: 08.08.1996 JP 22765596
(43) Date of publication of application: 25.02.1998
(73) Proprietor: RHEON AUTOMATIC MACHINERY CO. LTD., Utsunomiya-shi Tochigi-ken (JP)
(72) Inventor: Onoguchi,Kazuyoshi Rheon Automatic Machinery Co.Lt, Utsunomiya-shi Tochigi-ken (JP); Tashiro,Yasunori Rheon Automatic Machinery Co. Ltd, Utsunomiya-shi Tochigi-ken (JP)
(74) Representative: Jackson, Robert Patrick

(56) References cited:
- EP-A- 0 230 368
- EP-A- 0 247 826
- EP-A- 0 455 394
- EP-A- 0 553 958
- EP-A- 0 601 194
- US-A- 5 031 520

## Description

This invention relates to a method and apparatus for manufacturing raised-brimmed products, namely products with a raised edge or brim, such as a pizza, an apple pie, or a tart cake, and also to providing means which enables apparatuses used for manufacturing bean-jam buns, filling-containing dumplings, etc., to readily form the first-mentioned products.

A pizza with a raised brim is a very popular product since it is tasty, and has a shapely appearance. It is made, for example, by topping a circular pizza dough sheet with toppings of tomatoes, cheese, ham, mushrooms, sliced onions, etc., forming a raised brim around the periphery of the circular sheet, and baking it in an oven.

Up to recent times these pizzas had been manually made. However, their popularity and the progress in the freeze-preservation technique have helped promote mass production and mechanization of these products.

However, the conventional method of mechanically making pizzas consists of two processes, namely, dividing a dough sheet and covering it with toppings. In a conventional apparatus for making a raised-brimmed pizza, an appropriately divided dough ball or a properly shaped dough sheet is stamped and then processed to obtain a dough base with a raised brim, and the inside of the raised-brimmed dough is covered with various kinds of toppings or fillings.

The conventional apparatus above merely replaced the two steps of the manual manufacturing process with a mechanical process, and needs many forming sub-steps, and results in requiring large-scale machines.

There are also similar problems in making cakes such as apple pies or tarts in that many steps are involved: in forming pie dough or tart dough, which both contain oils and fats, and which both are viscoelastic, into a raised-brimmed base manually or by mechanical molds; and then in pouring fillings such as apple slices or cream, etc. into the hollow of the base.

One purpose of this invention is to provide a method and apparatus for making raised-brimmed products. It comprises a simple process based on a conception totally different from the conventional process or apparatus, instead of a large-scale method and apparatus wherein all the sub-steps of the conventional manual process are merely replaced with corresponding sub-steps carried out by a mechanical process.

This invention, at least in its preferred forms, aims to solve the above problems of the conventional two-step processes comprising dough dividing and topping processes by replacing them with a one-step process. The process allows raised-brimmed products to be made by feeding a two-layered continuous bar-shaped dough body into a central opening formed by the combination of a plurality of pieces of blocks and by cutting the bar-shaped dough body by closing the opening, wherein a surface of each piece of block is arranged to form the central opening, and wherein an edge portion meets a bottom surface of the block at an acute angle and a concave surface is provided on the bottom surface of a piece of block adjacent to the edge portion.

Viewed from one aspect, the invention comprises an apparatus for making raised brimmed products comprising a housing with an opening provided with sliding surfaces, and a plurality of pieces of polyhedral blocks disposed in the housing such that pieces of the blocks synchronously slide along the sliding surfaces of the housing so as to form a central opening formed by the pieces of the blocks, through which opening a bar-shaped dough body passes. The apparatus is characterized by an inner side surface formed on each of the blocks in the central opening, which surface meets a top surface of the piece of the block at an obtuse angle, and also meets a bottom surface thereof, which is parallel to the top surface, at an acute angle, and a concave surface provided on the bottom surface adjacent to the side surface.

Viewed from another aspect, the invention comprises an apparatus for making raised brimmed products comprising a plurality of blocks pivotally fit in fulcrums equidistantly disposed on a circular body such that a central opening is formed by said blocks in a cooperative manner so as to allow the opening to close and open. It is characterized by a side surface formed of each of the blocks to face the opening, which side surface meets a flat top surface of the block at an obtuse angle, and also meets a bottom surface, which is parallel to the top surface, at an acute angle, and a concave surface provided on a bottom surface adjacent to the edge portion.

Certain embodiments of the invention will now be described, by way of example only, and with reference to the accompanying drawings:-
Fig. 1 is a perspective view of a piece of block 1A of a first embodiment.
Fig. 2 is a section along the line A-A of Fig. 1.
Fig. 3 is a front view showing in section a bar-shaped dough body 2 of the first embodiment.
Fig. 4 is a front view showing a state where pieces of the blocks 1A of the first embodiment are closed.
Fig. 5 is a rear view of combined pieces of the blocks 1A of the first embodiment.
Fig. 6 is a perspective view of a raised-brimmed product 2A.
Figs. 7a - 7e explain positions of the blocks at various steps of the first embodiment.
Figs. 8f - 8h explain positions of the blocks at further steps of the first embodiment.
Fig. 9 is a perspective view of a piece of block 1B of a second embodiment.
Fig. 10 is a perspective view of partly combined pieces of the blocks 1B of the second embodiment.
Figs. 11a - 11e explain positions of the blocks at various steps of a second embodiment.
Fig. 12 is a perspective view of a piece of block 1C of a third embodiment.
Fig. 13 is a front view showing a state where combined pieces of the blocks 1C of the third embodiment are opened.
Fig. 14 is a front view showing a state where combined pieces of the blocks 1C of the third embodiment are closed.
Fig. 15 explains a transmission mechanism of pieces of blocks of the third embodiment.
Fig. 16 is a front view showing the entire apparatus of the third embodiment.
Fig. 17 is a front view showing a transmission portion of the third embodiment.
Fig. 18 is a side view also showing a transmission portion of the third embodiment.
Figs. 19a - 19e explain positions of the blocks at various steps of the third embodiment.
Fig. 20 is a perspective view of another piece of block 1D of the third embodiment.

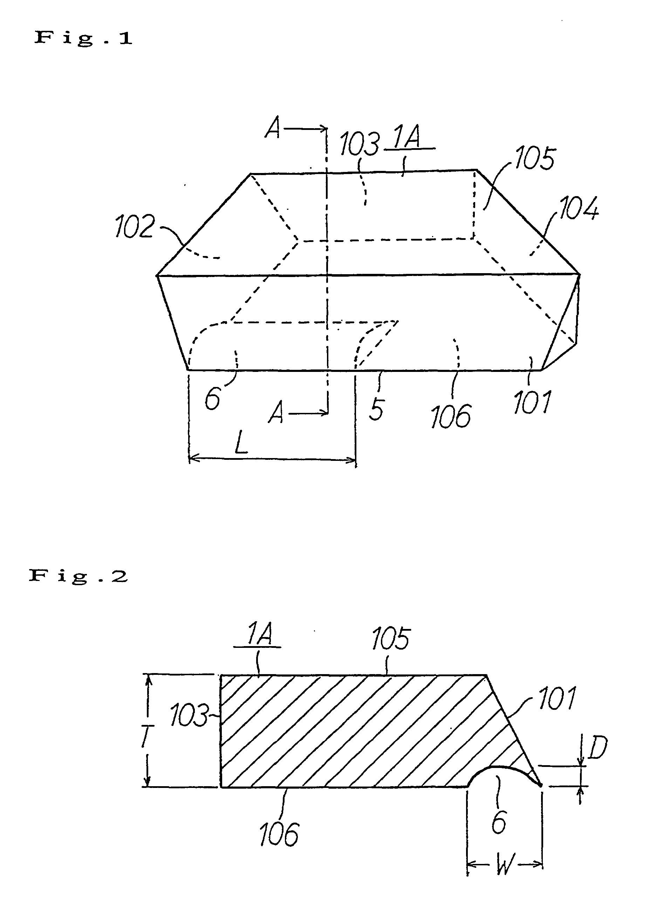

An embodiment of this invention will now be described by reference to Figs. 1 - 8.

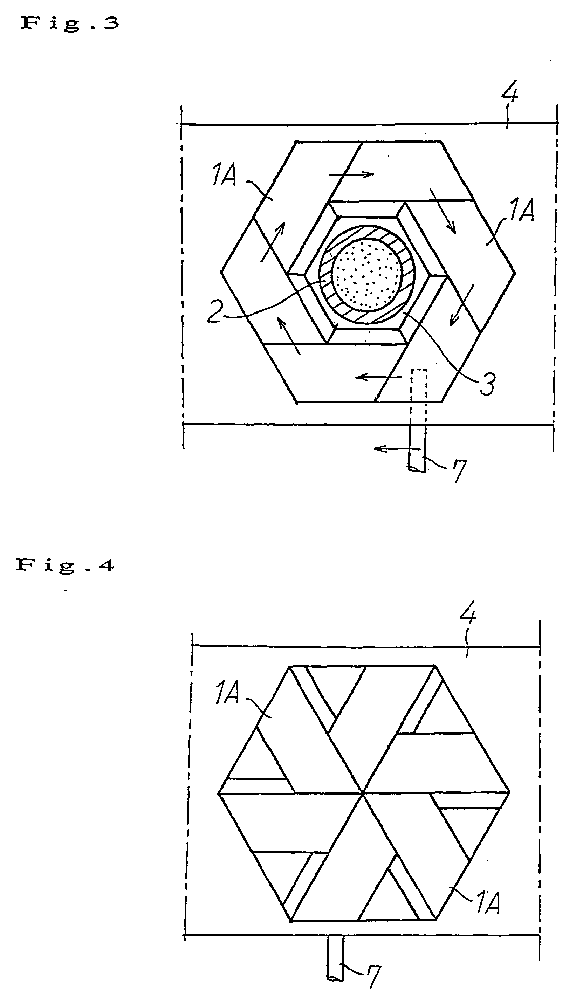

As is shown in Figs. 3 and 4, six pieces of blocks 1A are combined in a housing 4 such that they can be freely opened and closed so as to form a central opening 3 through which a continuous bar-shaped dough body 2 passes. The bar-shaped dough body 2, which is formed by enveloping fillings such as vegetables, cheese, ham, etc. with a crust of material, namely, pizza dough, is continuously supplied. The bar-shaped dough body 2 is manufactured such that materials are discharged through a double nozzle (a nozzle for forming a coaxial double-layered bar) by means of discharge means such as a vane pump or such that fillings are enveloped in a sheet of dough. Preferably an appropriate manufacturing method is selected according to the amount to be produced, etc.

In Fig. 1, a piece of block 1A has a thickness T, the inner sliding side surfaces 101 and 102 of which block abut the inner sliding side surfaces 102 and 101 of an adjacent piece of block 1A, respectively, the sliding outer side surfaces 103 and 104 of which block slide on the sliding surfaces of the housing 4. The side surface 101 is slanted such that it meets a flat top surface 105 at an obtuse angle, and it also meets a bottom surface 106 at its bottom surface at an acute angle. The end where the inner side surface 101 meets the bottom surface 106 forms an edge portion 5. In this embodiment a part of the inner sliding surface 101 that meets an outer side surface 104 is cut so that, as shown in Fig. 4, when the central opening is closed, the cut portion snugly fits the inner surface of the housing.

The bottom surface 106 of a piece of block 1A is parallel to its top surface 105. A groove 6, whose width, depth, and length are W, D, and L, respectively, is provided at a position adjacent to the edge portion 5. The groove is, e.g., substantially a semicircle whose width W is preferably greater than the thickness of the crust material of the continuous bar-shaped dough body 2. The groove 6 can form a concave surface of any shape so as to prevent the crust material of the cut bar-shaped dough body 2 from contacting the bottom surface 106.

A rod 7, one end of which is inserted in a piece of block 1A, reciprocates in a certain direction so as to transmit a drive force to the block 1A held in the housing 4.

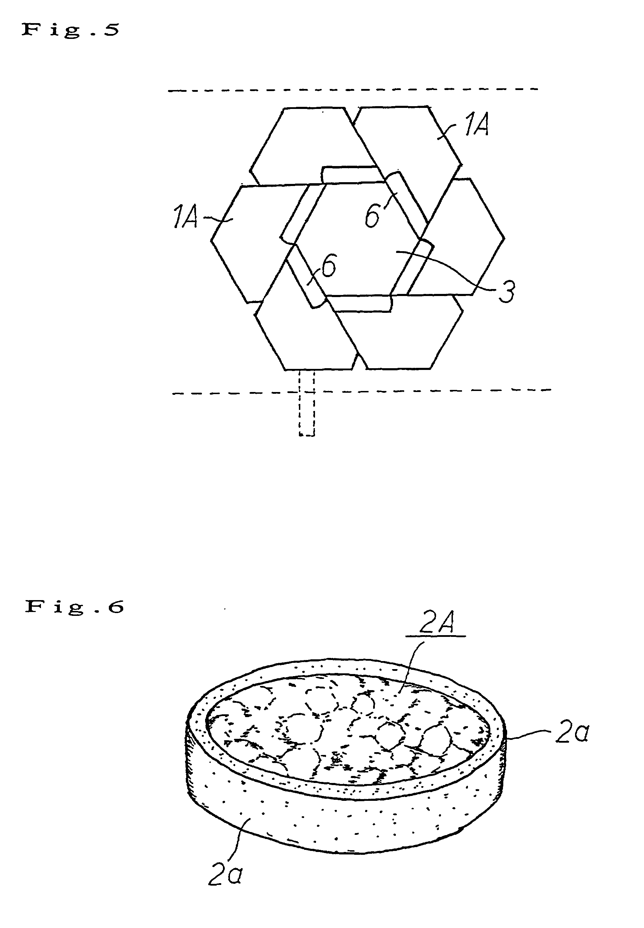

A raised-brimmed product 2A shown in Fig. 6 has a raised brim 2a cut and formed by pieces of blocks 1A.

To prevent the six pieces of block 1A in the housing 4 from being forced out of it when being driven, a lid (not shown) may be disposed above the blocks 1A where both the passage of the bar-shaped dough body 2 and the opening and closing movements of the blocks 1A are unhindered.

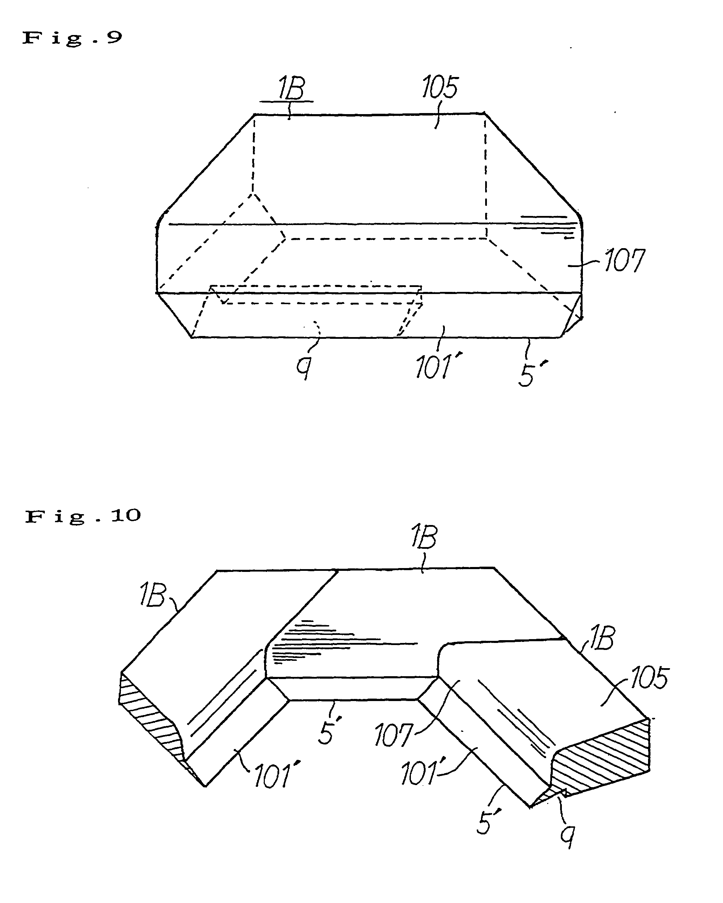

A second embodiment of this invention will now be described by reference to Figs. 9 - 11. Components like those in the first embodiment of this invention are designated by like reference numbers, to omit explaining them.

A piece of block 1B has an edge portion 5'. It is much sharper than that of a piece of the block 1A of the first embodiment. A substantially vertical press surface 107 is provided between its slant surface 101' and top surface 105. The press surface 107 is necessary for an enveloping action (to be explained below), the thickness of which surface is preferably determined according to the properties of a crust material whenever appropriate.

The part where the top surface 105 and press surface 107 meet is rounded to reduce resistance generated when it contacts the bar-shaped dough body 2. A concave surface or hollow 9, the depth of which gradually increases from the edge portion 5' in its width direction, and which has a given length and area, forms a surface uncontacted by the bar-shaped dough body being cut.

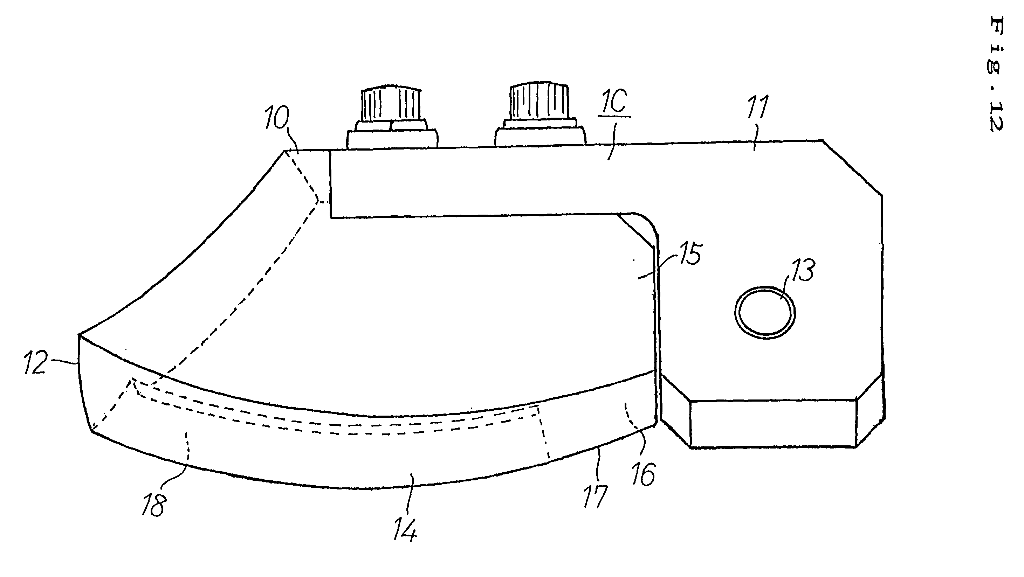

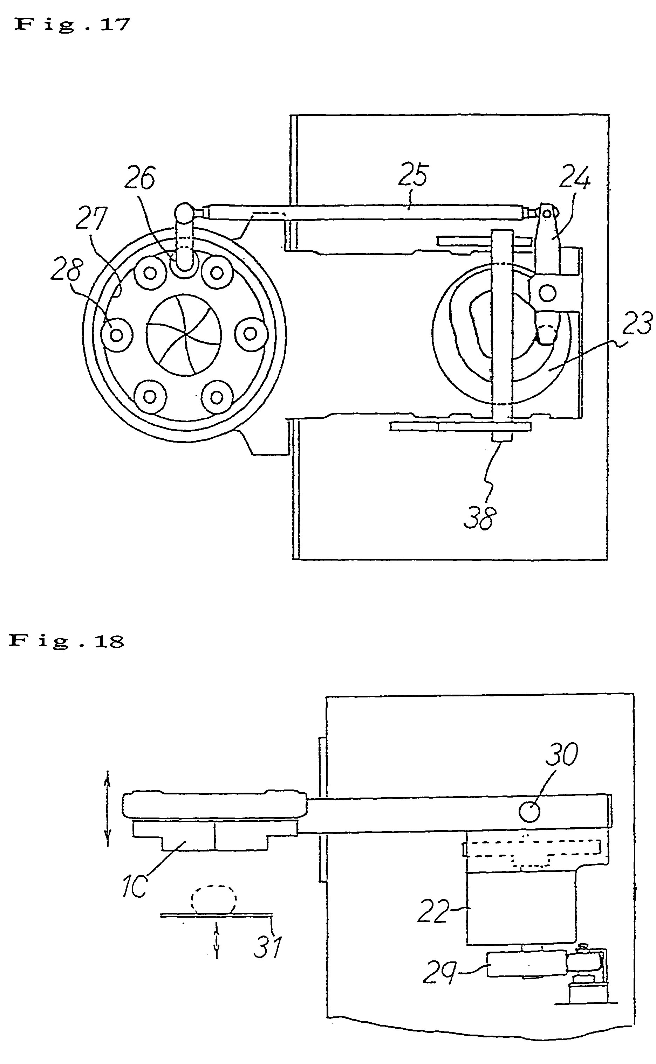

A third embodiment of this invention will now be described by reference to Figs. 12 - 19. In the first and second embodiments the bar-shaped dough body 2 is cut by the reciprocation of pieces of the blocks 1A, 1B in the housing 4, while in the third embodiment blocks 1C are used, each of which has a fulcrum 13 to be fit in one of pivotal shafts P equidistantly disposed on a circle, without using the housing 4.

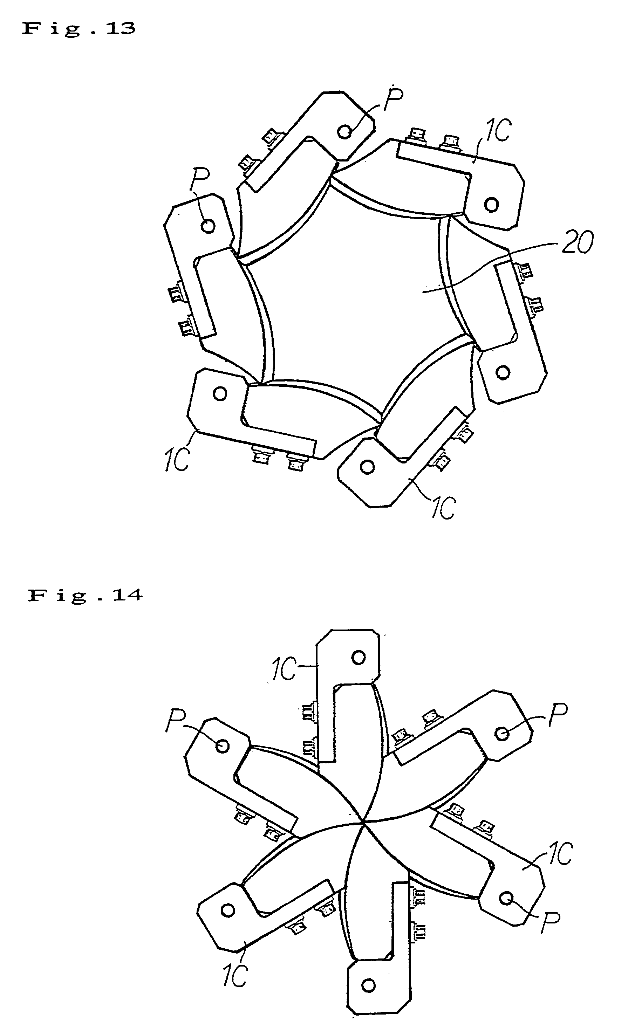

The features of the block 1C will now be described by reference to Fig. 12. It consists of a cutter portion 10 and a holder portion 11. The cutter portion 10, whose thickness is T, has a tip edge 12 at its end. A side edge 14 is formed from the tip edge 12 toward the fulcrum 13 of the holder portion 11. Each of identical blocks 1C is fit in one of the pivotal shafts P equidistantly disposed on a circle (Figs. 13 and 14) so as to place the cutter portion 10 on the same level.

The side edge or surface 14, having an enveloping function, is slanted, meeting a top surface 15 at an obtuse angle, and forms an edge portion 17 meeting a bottom surface 16 of the cutter portion 10 at an acute angle. A hollow 18, extending from the edge portion 17 over a certain length, is provided on the bottom surface 16. The hollow 18, which forms a concave surface uncontacted by the bar-shaped dough body being cut, has preferably a width greater than the thickness of the crust material of the bar-shaped dough body 2 to be cut, and the depth of the hollow increases in its width direction at a given angle.

In this embodiment a discharge means for extruding food material in the continuous bar-shaped dough body 2 is designated as X in Fig. 16. The discharge means X forms the continuous bar-shaped dough body 2 and extrudes it into an enclosure 20, formed by six pieces of blocks 1C, disposed below the discharge means.

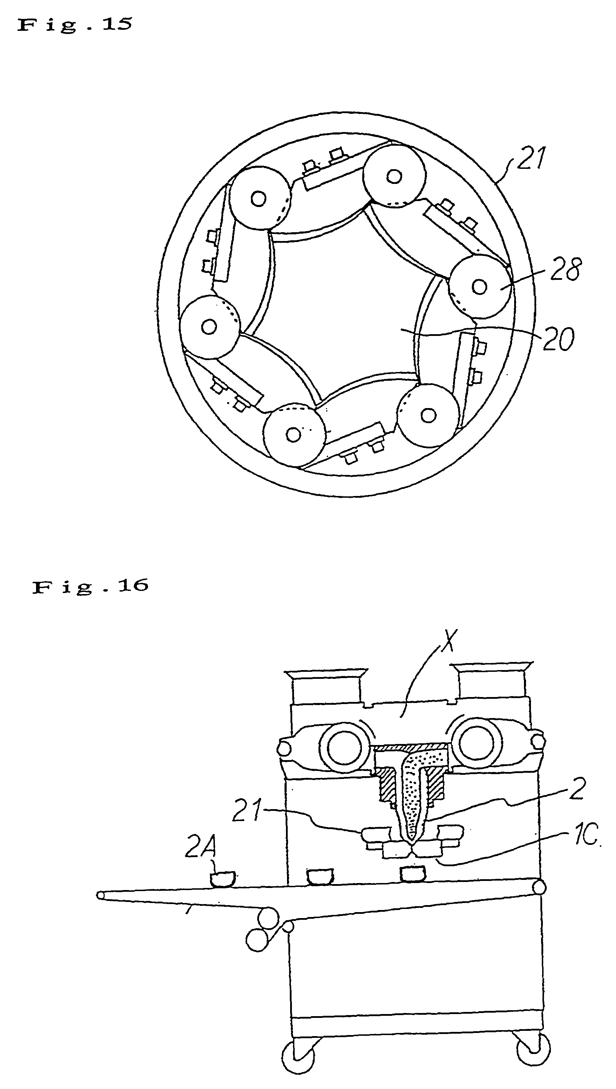

Figs. 15, 17, and 18 show a driving mechanism 21 for rotating the blocks 1C in forward and backward directions. In it the rotational movement of a motor 22 is transmitted to gears 27,28 via a cam 23, an arm 24, a rod 25, and a gear 26, so that each block 1C is synchronously rotated to cut and form the bar-shaped dough body 2. A cam 29, connected to the motor 22, is for moving up and down the entire driving mechanism 21 for the blocks 1C. That is, the driving mechanism 21 is moved up and down about a pivot 30 by means of the rotation of the cam 29.

A conveyor 31 is disposed below the driving mechanism 21 so that products cut and formed by the blocks 1C are received thereon and transported to the next process. The conveyor 31 may be moved up and down in synchronism with the up-and-down movement of the driving mechanism 21 when products are being received.

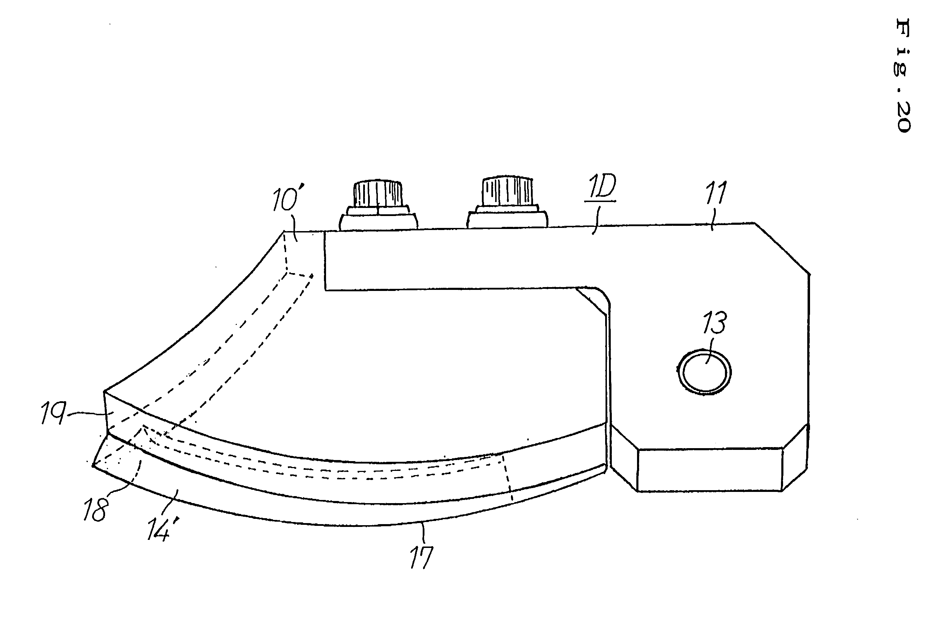

As another example of this embodiment, Fig. 20 shows a block 1D for dealing with a crust dough body of a strong viscoelasticity. In this case a substantially vertical press surface 19 of a given thickness is provided above a slant 14'.

Effects and operations of the first embodiment will now be described by reference to Figs. 1 - 8. The opening 3 is opened and closed such that the rod 7 is driven by a power source (not shown) and reciprocates over a given distance, and such that each of six pieces of blocks 1A, which are connected to the rod 7, and which are combined in a ring within the housing 4, also slides in synchronism therewith so as to open and close the opening 3. This opening and closing movement enables the bar-shaped dough body to be continuously fed into the opening 3 to be cut to produce a product 2A.

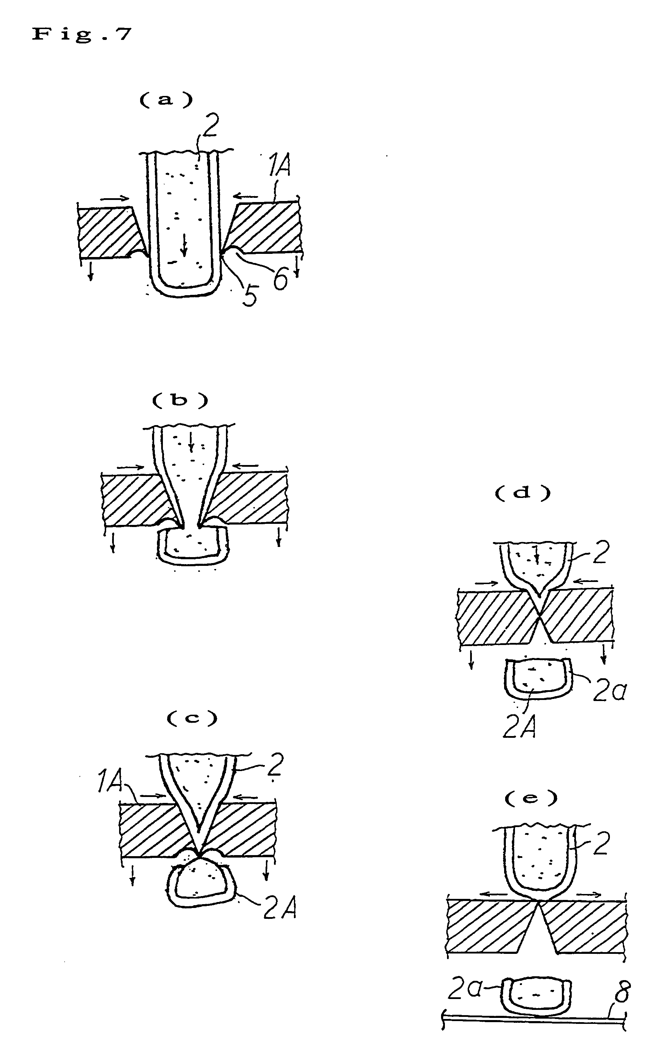

The processes of cutting the bar-shaped dough body will now be described by reference to Figs. 7a - 7e.

In Fig. 7a the pieces of blocks 1A start closing the opening, and they are going to penetrate the bar-shaped food 2.

In Fig. 7b the pieces of blocks 1A are penetrating and cutting the bar-shaped food 2: the edge portions 5 of the blocks 1A have already cut the crust, and penetrated the fillings. This step shows the essential functions and effects of this embodiment in that the edge portion 5 first contacts the viscoelastic crust material and gradually moves it toward the center by the slant surface 101 as the edge portion 5 penetrates thereinto. During this process the groove 6, provided around the edge portion 5 on the bottom surface 106, enables the crust material of the bar-shaped dough body 2 to be neatly cut by eliminating any contact thereof with the bottom surface 106. That is, if no groove 6 is provided around the edge portion 5, then due to the viscoelasticity of the crust material the material adheres to the bottom surface 106, and is moved toward the center, so that no effective cutting is achieved.

In Fig. 7c each edge portion 5 has gathered at the center of the opening 3, the opening is completely closed, and a product 2A has just been formed from the bar-shaped dough body 2.

In Fig. 7d the blocks 1A are further progressing to envelope the cut surface of the continuous bar-shaped dough body 2 on the upper side. That is, even in a state as shown in Fig. 7c the crust material on the upper side has already been gathered and cut. However, depending on the properties of the dough there may be some incomplete formations of the enveloping crust. If the blocks 1A are opened in such a state, the cut part will open so that production will not be continued because of incomplete formations of the enveloping crust on the lower side of the product 2A. The above-mentioned process (Fig. 7d) is thus provided to effectively form the enveloping crust and to effectively move the crust dough by pressing the crust dough with the slant surface 101. Accordingly, any desired effect commensurate with the properties of the crust dough can be achieved by adjusting the angle of inclination of the slant surface 101.

Fig. 7e shows a state wherein the cutting process by the blocks 1A has been completed, and the slant surface has almost disappeared. After the cut surface of the bar-shaped dough body 2 has been neatly formed by effectively forming and effectively moving the crust dough by the slant surface, it returns to a state shown in Fig. 7a.

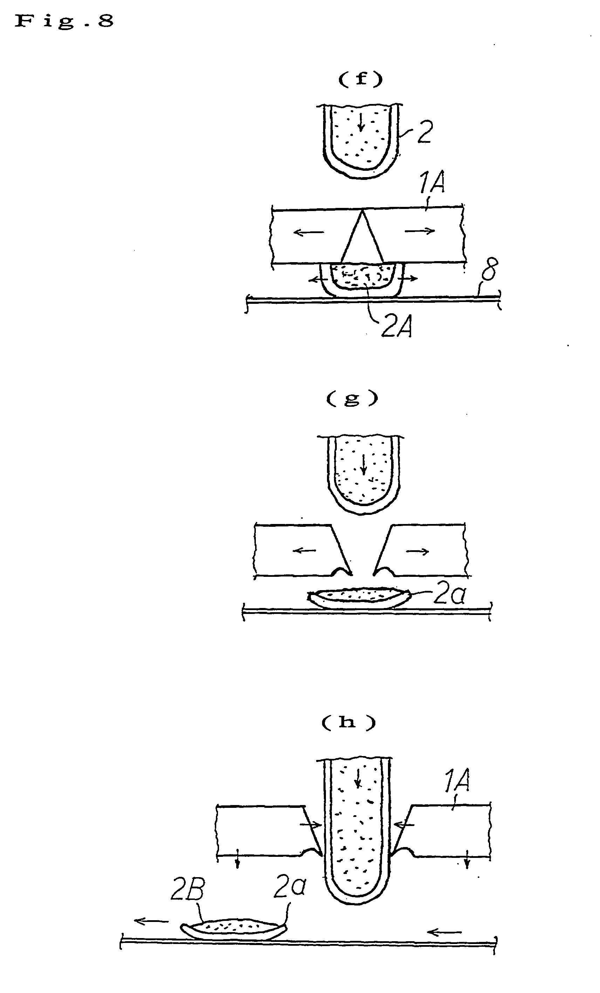

It should be noted that preferably the supply of the bar-shaped dough body 2 can be appropriately selected at any time according to processing conditions such as the properties of the dough 2 and the produced amounts. This can be carried out by supplying the dough body 2 at a variable speed or in an intermittent manner, and by adjusting the up-and-down movements in synchronism with the opening and closing of the pieces of blocks 1A. If a large diameter of a bar-shaped dough body or a flatter product is desired, this can be carried out by moving pieces of the blocks 1A outward in the same horizontal surface, while the cut and formed product is sandwiched between pieces of the blocks 1A and a receiving conveyor 8. The forming steps of this are shown in detail in Figs. 8f - 8h.

Fig. 8f shows a state wherein a product is sandwiched between pieces of the blocks 1A and a receiving conveyor 8.

In this state the crust material of the product 2A touches the bottom surface of pieces of the blocks 1A. The pressure to be exerted on the sandwiched material is determined according to the aimed-at product and its quality. As pieces of the blocks 1A open, a radial force is exerted on the crust material touching the bottom surface 106.

Fig. 8g shows a state wherein pieces of the blocks 1A are opening, and the product has been already deformed into a flatter one.

In Fig. 8h the process of opening is being replaced by that of closing, and the next cutting/forming process is going to start. The product formed into a flatter shape is then intermittently conveyed by the receiving conveyor 8 to the next process.

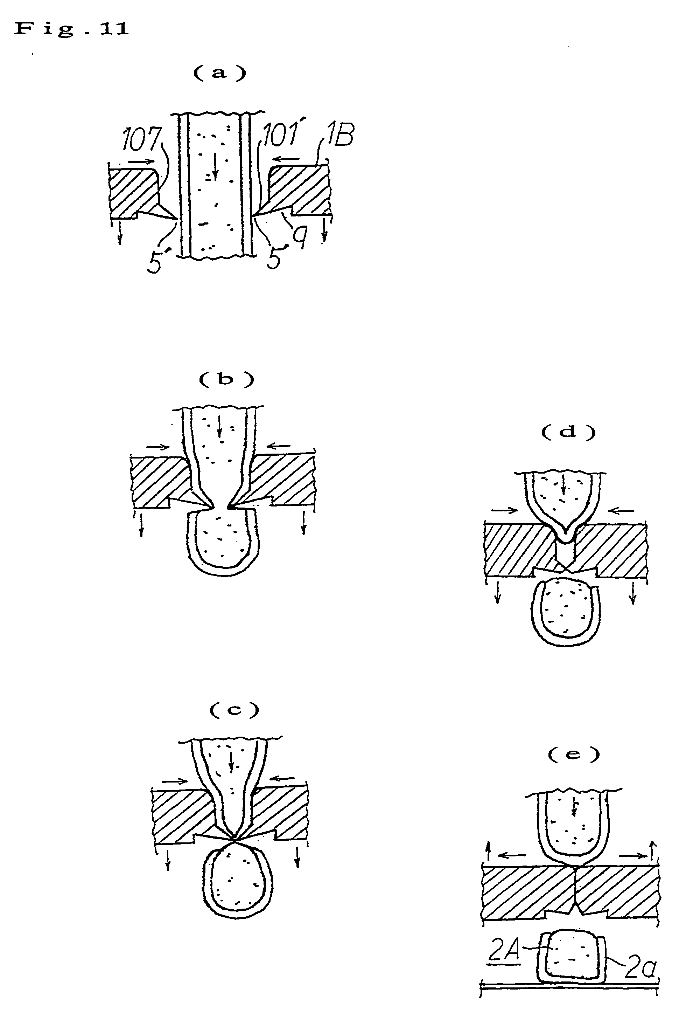

The effects and operations of the second embodiment will now be described by reference to Figs. 9 - 11. To deal with dough of a stronger viscoelasticity, the block 1B is adapted such that a hollow 9 is provided on the bottom surface 106 below a slant surface 101' of the block 1B, and such that an acuter contact angle than that of the block 1A is provided between the bottom surface 106 and the slant surface 101'. As can be seen from the change in the steps of the cutting processes shown in Figs. 11a and 11b, since the penetration angle of the edge portion 5' against the dough bar 2 is almost vertical, the edge portion 5' can smoothly penetrate the dough bar 2 to more effectively cut it.

However, the effect of cutting/enveloping the upper side of the dough bar decreases in inverse proportion to the increase in the effect of cutting. That is, although the cut crust of the dough bar 2 is press-combined by the slant surface 101' to form the enveloped bottom, the sharpened edge 5 itself does not effectively press-combine the crust. To compensate for this reduced slant surface a very large edge portion 5 may be needed. This is unacceptable in view of its cutting speed. This invention can deal with this reduced press-constriction action by providing a supplemental press surface 107 to the slant surface 101'. Since this invention can thus effectively cut and envelope the dough, it can certainly manufacture cut and enveloped products even from a sticky dough material.

The effects and operations of the third embodiment will now be described by reference to Figs. 12 - 19. In this third embodiment the continuous dough body 2 passing through the opening 20 is cut and enveloped such that the blocks 1C swingingly open and close the central opening 20, while the tip edge 12 of each block 1C makes a line contact with the side edge of an adjacent block 1C (Figs. 13 and 14).

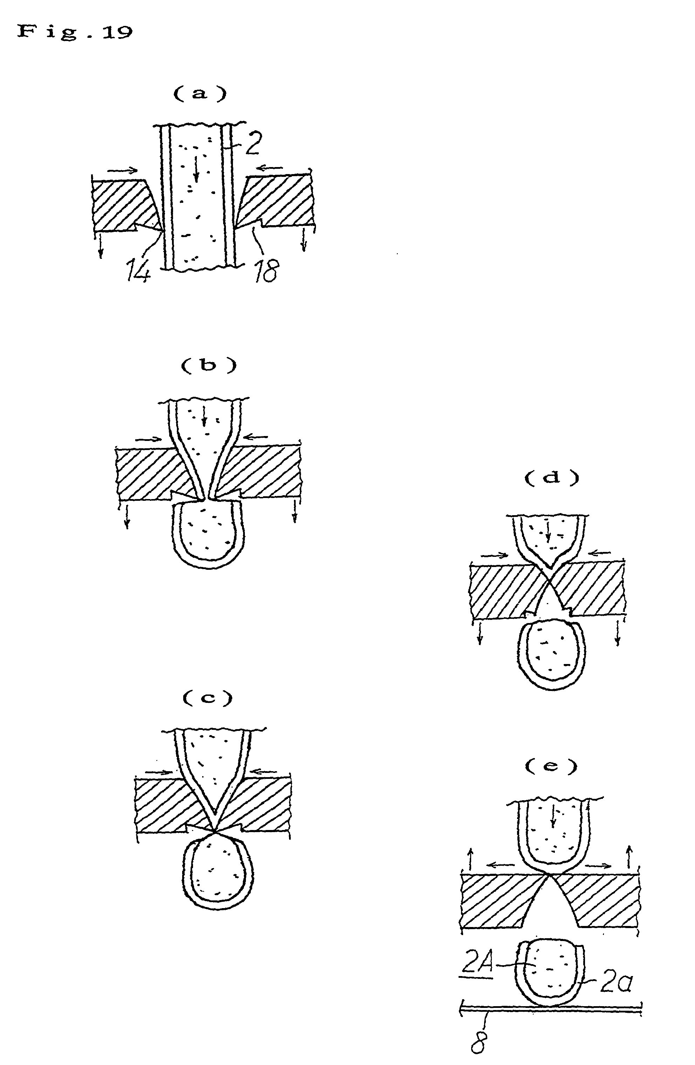

As is shown in Figs. 19a and 19b, since a groove 18 of a given length extending from the tip of the block along its edge portion 17 is provided on the bottom surface 16 of the block, neatly-cut products 2A can be manufactured. This is because the crust of the bar-shaped dough 2 to be cut off will not be induced to move toward the fillings. That is, the product is cut by line contact, instead of face contact, since during the cutting process the crust will not touch the bottom surface. Although the depth of the hollow 18 increases from the edge portion 17 at a given angle, any shape of groove can be used whenever the crust of bar food does not touch the bottom surface 16.

A block 1D of the third embodiment is shown in Fig. 20 as another example. Since the the block 1D comprises an edge portion 17' meeting the bottom surface at an acuter angle, and a press surface 19 of a given thickness extending upward, namely, substantially parallel to the bar-shaped dough 2, from a slant surface 14', it can deal with dough of a stronger viscoelasticity. In other words, since the penetration angle of the edge portion 17' is almost perpendicular to the bar-shaped dough body 2, it can smoothly penetrate the dough bar 2, so that even a dough material of a strong viscoelasticity can be effectively cut. Further, the block 1D has a hollow 18 on its bottom surface, so it can thus neatly cut a product without any crust material adhering to the bottom surface.

Moreover, since the press surface 19, having strong pressing and constricting actions, is provided by a vertical surface above the slant surface, the less effective combining and enveloping actions of the slant surface due to its reduced pressing and constricting actions can be supplemented by providing the vertical surface 19 even for a sticky dough material. Thus, products 2A, used widely for various purposes, can be continuously produced by using the above-mentioned structure with improved functions and effects of both cutting and cutting/enveloping.

Although in the embodiments above the bar-shaped dough 2 comprises a crust of pizza dough and fillings used for a pizza, it is not so limited. Fermented viscoelastic bread dough or viscoelastic pie dough, tart dough, or biscuit dough, each containing oils and fats or other fillings, may also be used as a crust. Solid food such as fruits or a semifluid material such as jam, bean jam or cream may also used as fillings according to the products aimed at.

As is described above, the invention of claim 1 makes it possible to manufacture raised-brimmed products by using a manufacturing method which is quite different from and much simpler than the conventional one that has been used to date.

The features of claim 2 makes it possible to manufacture a raised-brimmed product which is similar to a flat-shaped product such as conventional pizza with a raised edge, by using a manufacturing method which is quite different from and much simpler than the conventional one that has been used up to now.

The features of claims 3 and 4 make it possible to manufacture the same products by using apparatuses that are much simpler and cheaper compared to the conventional ones. That is, as already described, the conventional apparatus above, which merely mechanizes manual manufacturing processes, needs many forming processes and very delicate controls. Thus, it results in large-scale expensive means requiring a large manufacturing area. In contrast, this invention aims to provide a simpler process and apparatus of a totally different conception, instead of a large-scale method and apparatus wherein the entire conventional manual process is merely mechanized. Thus, the apparatus is compact, and is much superior in handling and operation. This inexpensive apparatus enables those products that have been hitherto of high-added value and high-priced to be widely distributed.

To maintain high qualities comparable to those of hand-made raised-brimmed products, a noncontact portion for a bar-shaped product is provided adjacent to the edge portion on the bottom surface of each piece of blocks to cut and form the products. This enables bar-shaped dough with a sticky crust material to be effectively and completely cut without the inside fillings being hidden, so as to obtain high-value-added and high-quality products.

## Claims

1. A method of manufacturing a raised-brimmed product comprising the steps of
feeding a two-layered continuous bar-shaped dough body into a central opening formed by the combination of a plurality of pieces of blocks, each said piece of block having an inner side surface meeting a bottom surface of the block at an acute angle, each inner side surface forming the central opening in coaction with the inner side surface of the other blocks, and the bottom surface having a concave surface adjacent to the side surface, and
cutting the bar-shaped dough body by closing the opening formed by the inner side surfaces.

2. A method of manufacturing a raised-brimmed product according to claim 1, further comprising the step of
pressing an upper surface of the cut dough body to flatten it.

3. A method of manufacturing a raised-brimmed product of claim 1 or 2, wherein the plurality of pieces of blocks are pivotally fit in fulcrums equidistantly disposed on a circle such that the central opening is opened and closed.

4. An apparatus for manufacturing a raised-brimmed product comprising a housing with an opening provided with sliding surfaces, and a plurality of pieces of polyhedral blocks disposed in the housing such that pieces of the blocks synchronously slide along the sliding surfaces of the housing so as to form a central opening formed by the pieces of the blocks, through which opening a bar-shaped dough body passes, the apparatus being **characterized by**
an inner side surface formed on each of the blocks in the central opening, which surface meets a top surface of the piece of the block at an obtuse angle, and also meets a bottom surface thereof, which is parallel to the top surface, at an acute angle, and
a concave surface provided on the bottom surface adjacent to the side surface.

5. An apparatus for manufacturing a raised-brimmed product of claim 1, wherein the inner side surface has a pressing portion, and an edge portion, the pressing portion having a pressing surface almost parallel to the side of the bar-shaped dough body, and being provided above the edge portion.

6. An apparatus for manufacturing a raised-brimmed product comprising a plurality of blocks pivotally fit in fulcrums equidistantly disposed on a circular body such that a central opening is formed by said blocks in a cooperative manner so as to allow the opening to close and open, **characterized by** a side surface formed of each of the blocks to face the opening, which side surface meets a bottom surface, which is parallel to the top surface, at an acute angle, and
a concave surface provided on a bottom surface adjacent to the edge portion.

7. An apparatus for manufacturing a raised-brimmed product of claim 6, wherein the side surface meets a flat top surface of the block at an obtuse angle.

8. An apparatus for manufacturing a raised-brimmed product of claim 6, wherein the side surface has a pressing portion and edge portion, the pressing portion being provided above the side surface forming a pressing surface almost parallel to the side of the bar-shaped dough body.

## Patentansprüche

1. Verfahren zum Herstellen eines Produkts mit einem vorspringenden bzw. erhöhten Rand, aufweisend die Schritte
des Zuführens eines zweischichtigen, kontinuierlichen, stangenförmigen Teigkörpers in eine zentrale Öffnung, die durch die Kombination einer Mehr- oder Vielzahl von Blockstükken gebildet ist, wobei jedes Blockstück eine innere Seitenfläche aufweist, die in einem spitzen Winkel auf eine Bodenfläche des Blocks trifft, wobei jede innere Seitenfläche in Zusammenwirkung mit der inneren Seitenfläche der anderen Blöcke die zentrale Öffnung bildet und die Bodenfläche eine konkave Fläche angrenzend an die Seitenfläche aufweist, und
des Schneidens des stangenförmigen Teigkörpers durch Schließen der durch die inneren Seitenflächen gebildeten Öffnung.

2. Verfahren zum Herstellen eines Produkts mit einem vorspringenden bzw. erhöhten Rand nach Anspruch 1, des Weiteren aufweisend den Schritt
des Drückens einer oberen Fläche des geschnittenen Teigkörpers, um ihn flach zu machen.

3. Verfahren zum Herstellen eines Produkts mit einem vorspringenden bzw. erhöhten Rand nach Anspruch 1 oder 2, wobei die Mehr- oder Vielzahl von Blockstücken drehbar in Drehpunkten angebracht ist, die in gleichen Abständen in einem Kreis angeordnet sind, so dass die zentrale Öffnung geöffnet und geschlossen wird.

4. Einrichtung zum Herstellen eines Produkts mit einem vorspringenden bzw. erhöhten Rand, aufweisend ein Gehäuse mit einer Öffnung, die mit Gleitflächen versehen ist, und eine Vielzahl von Stücken von polyhedralen (polyedrischen, vielflächigen) Blöcken, die in dem Gehäuse angeordnet sind, so dass Blockstücke synchron entlang der Gleitflächen des Gehäuses gleiten, um eine zentrale Öffnung zu bilden, die durch die Blockstücke gebildet wird, durch welche Öffnung ein stangenförmiger Teigkörper hindurch geht, wobei die Einrichtung **gekennzeichnet ist durch**
eine innere Seitenfläche, die an jedem der Blöcke in der zentralen Öffnung gebildet ist, welche Fläche in einem stumpfen Winkel auf eine obere Fläche des Blockstücks trifft und auch, in einem spitzen Winkel, auf eine Bodenfläche davon trifft, die parallel zur oberen Fläche ist, und
eine konkave Fläche, die an der Bodenfläche angrenzend an die Seitenfläche vorgesehen ist.

5. Einrichtung zum Herstellen eines Produkts mit einem vorspringenden bzw. erhöhten Rand nach Anspruch 1, wobei die innere Seitenfläche einen Druckabschnitt und einen Kantenabschnitt aufweist, wobei der Druckabschnitt eine Druckfläche aufweist, die fast parallel zur Seite des stangenförmigen Teigkörpers ist, und oberhalb des Kantenabschnitts vorgesehen ist.

6. Einrichtung zum Herstellen eines Produkts mit einem vorspringenden bzw. erhöhten Rand, aufweisend eine Mehr- oder Vielzahl von Blöcken, die drehbar in Drehpunkten angebracht sind, die in gleichen Abständen auf einem kreisförmigen Körper angeordnet sind, so dass eine zentrale Öffnung durch die Blökke zusammenwirkend gebildet ist, damit die Öffnung geschlossen und geöffnet werden kann, **gekennzeichnet durch** eine Seitenfläche, die von jedem der Blöcke gebildet wird und der Öffnung zugewandt ist, welche Seitenfläche in einem spitzen Winkel auf eine Bodenfläche trifft, die zur oberen Fläche parallel ist, und
eine konkave Fläche, die auf einer Bodenfläche angrenzend an den Kantenabschnitt vorgesehen ist.

7. Einrichtung zum Herstellen eines Produkts mit einem vorspringenden bzw. erhöhten Rand nach Anspruch 6, wobei die Seitenfläche in einem stumpfen Winkel auf eine flache obere Fläche des Blocks trifft.

8. Einrichtung zum Herstellen eines Produkts mit einem vorspringenden bzw. erhöhten Rand nach Anspruch 6, wobei die Seitenfläche einen Druckabschnitt und einen Kantenabschnitt aufweist, wobei der Druckabschnitt oberhalb der Seitenfläche, die eine Druckfläche bildet, die zur Seite des stangenförmigen Teigkörpers fast parallel ist, vorgesehen ist.

## Revendications

1. Procédé de fabrication d'un produit à rebords surélevés comprenant les phases consistant à :
distribuer un corps de pâte en forme de bâton, continu, à deux couches, dans une ouverture centrale formée par la combinaison d'une pluralité de pièces de blocs, chacune desdites pièces de bloc comportant une surface latérale interne rencontrant une surface inférieure du bloc à un angle aigu, chaque surface latérale interne formant l'ouverture centrale en coopération avec la surface latérale interne des autres blocs, et la surface inférieure comportant une surface concave adjacente à la surface latérale, et
couper le corps de pâte en forme de bâton en fermant l'ouverture formée par les surfaces latérales internes.

2. Procédé de fabrication d'un produit à rebords surélevés selon la revendication 1, comprenant également la phase consistant à presser une surface supérieure du corps de pâte coupé pour l'aplatir.

3. Procédé de fabrication d'un produit à rebords surélevés selon la revendication 1 ou 2, dans lequel la pluralité de pièces de blocs est ajustée de manière à pivoter en des points d'appui équidistants sur un cercle de manière que l'ouverture centrale soit ouverte et fermée.

4. Appareil de fabrication d'un produit à rebords surélevés comprenant un boîtier avec une ouverture doté de surfaces de glissement, et une pluralité de pièces de blocs polyédriques disposée dans le boîtier de manière que les pièces des blocs glissent de manière synchrone le long des surfaces de glissement du boîtier afin de former une ouverture centrale formée par les pièces des blocs, par laquelle ouverture un corps de pâte en forme de bâton passe, l'appareil étant **caractérisé par**
une surface latérale interne formée sur chacun des blocs dans l'ouverture centrale, laquelle surface rencontre une surface supérieure du bloc à un angle obtus, et rencontre également une surface inférieure du bloc, qui est parallèle à la surface supérieure, à un angle aigu, et
une surface concave située sur la surface inférieure adjacente à la surface latérale.

5. Appareil de fabrication d'un produit à rebords surélevés de la revendication 1, dans lequel la surface latérale interne comporte une portion de pression, et une portion de bord, la portion de pression comportant une surface de pression sensiblement parallèle à la face du corps de pâte en forme de bâton, et étant située au-dessus de la portion de bord.

6. Appareil de fabrication d'un produit à rebords surélevés comprenant une pluralité de blocs ajustée de manière à pivoter en des points d'appui équidistants sur un corps circulaire de manière qu'une ouverture centrale soit formée par lesdits blocs qui coopèrent de manière à permettre à l'ouverture de se fermer et de s'ouvrir, **caractérisé par** une surface latérale constituée de chacun des blocs pour donner sur l'ouverture, laquelle surface latérale rencontre une surface inférieure, qui est parallèle à la surface supérieure, à un angle aigu, et
une surface concave située sur une surface inférieure adjacente à la portion de bord.

7. Appareil de fabrication d'un produit à rebords surélevés de la revendication 6, dans lequel la surface latérale rencontre une surface supérieure plate du bloc à un angle obtus.

8. Appareil de fabrication d'un produit à rebords surélevés de la revendication 6, dans lequel la surface latérale comporte une portion de pression et une portion de bord, la portion de pression étant située au-dessus de la surface latérale formant une surface de pression sensiblement parallèle au côté du corps de pâte en forme de bâton.
